# EUROPÄISCHE PATENTSCHRIFT

(11) **EP 1 911 854 B1**
(45) Veröffentlichungstag und Bekanntmachung des Hinweises auf die Patenterteilung: **13.07.2011**
(21) Anmeldenummer: 06122146.1
(22) Anmeldetag: 12.10.2006
(51) Int. Cl.: F16C 33/14, C22C 37/04, F16C 3/08, B24C 1/00

(54) **Entfernen von Deckeln in Oberflächensphärolithen von Graugusswerkstücken mittels Tieftemperaturbehandlung**
Removal of lids in surface spherical particles of grey cast workpiece by cryogenic treatment
ablation de couvercles sur des sphérolites de surface d'une pièce en fonte grise par traitement à basse température

(43) Veröffentlichungstag der Anmeldung: 16.04.2008
(73) Patentinhaber: Georg Fischer Automotive AG, 8200 Schaffhausen (CH)
(72) Erfinder: Menk, Werner, 8200, Schaffhausen (CH)
(74) Vertreter: De Colle, Piergiacomo

(56) Entgegenhaltungen:
- DE-A1-102005 051 715
- JP-A- 55 158 214
- JP-A- 2002 361 401

## Beschreibung

Die Erfindung betrifft ein Verfahren zur Oberflächenbehandlung von hoch beanspruchten gleitenden Lagerflächen für Kurbelwellen und Kurbelwellenlager von Gussteilen aus Gusseisen mit Kugelgraphit.

Schon lange werden Kurbelwellen aus Kugelgraphit enthaltendem Gusseisen hergestellt.

Aus früheren Veröffentlichungen sind Lösungen für die Bearbeitung von Oberflächen von Guss-Kurbelwellen bekannt, nämlich: Roemer, E. "Die Oberfläche von Lagerzapfen aus Grauguss und Kugelgraphitguss" GLYCO-METALL-WERKE Ingenieurbericht Nr. 2/1964 und H.P. Staudinger; H. Dreher "Lagerverhalten von Guss-Kurbelwellen, Georg Fischer AG 1988.

Aus DE102005051715 ist ein Verfahren zum Härten von Werkzeugen aus bainitischem Gusseisen mit Kugelgraphit bekannt, wobei die Werkzeuge einer Kryostrahlbehandlung mit Partikeln aus Trockeneis, bestehend aus gefrorenem Kohlendioxid, unterzogen werden.

Aus DE4421218 ist ein Verfahren zum Entgraten von Formteilen mittels Strahlgut bekannt, wobei als Strahlgut Kohlendioxidpellets verwendet werden.

Beim Schleifen bzw. bei der Endbehandlung (Finishing) der Lagerflächen, z.B. von Kurbelwellen aus Gusseisen mit Kugelgraphit werden zwangsläufig Sphärolithe freigelegt.

Dadurch entstehen sogenannte "Deckel" über angeschnittene Sphärolithe. Unter dem inzwischen sprachgebräuchlichen Begriff "Deckel" oder "Blechdeckel" versteht man die beim Anschnitt von Sphärolithen an der Oberfläche verbleibenden dünnen Reste der metallischen Grundmasse. Durch das Vorhandensein dieser Deckel kann es zu negativen Einflüssen auf das Verschleissverhalten der gleitenden Gussteile führen. Diese Deckel können im Betrieb abbrechen und im schlimmsten Fall zur Zerstörung von Lagerschalen und somit zu Motorschäden führen.

Die bisherigen Verfahren (s.o.) sind sehr aufwendig. Bei der Verwendung von bleihaltigen Lagerschalen ist ein Einsatz von Gusseisen mit Kugelgraphit z.B. für Kurbelwellen nur eingeschränkt, mit bleifreien Lagerschalen gar nicht möglich.

Somit ist es die Aufgabe der Erfindung ein Verfahren zu beschreiben, welches in einfacher Weise das Entfernen von Deckeln in Sphärolithen ermöglicht. Dies gilt ins besonderer auch für bleifreie Lagerschalen, zumal die europäischen Richtlinien zukünftig die Verwendung von bleifreien Lagerschalen vorschreiben.

Diese Aufgabe wird erfindungsgemäss durch ein Verfahren gemäß Anspruch 1 gelöst.

Die Deckel werden bei der Oberflächenbehandlung durch die extreme plötzliche Abkühlung versprödet und abgebrochen, so dass eine optimale Oberfläche für das Lagerverhalten erzeugt wird. Der Verschleiss wird durch diese Massnahme beträchtlich vermindert.

In vorteilhafter Weise werden die Oberflächen mit Trockeneiskugeln aus CO₂ beschossen. Besonders günstig ist die Verwendung von Trockeneiskugeln mit einem mittleren Durchmesser von 0.1 bis 5 mm, vorzugsweise von 1 bis 4 mm.

Eine weitere Möglichkeit zur plötzlichen Abkühlung der Deckel aufweisenden Oberflächen ist der Einsatz von einem flüssigen Gas mit geeigneter negativer Temperatur. Denkbar sind alle flüssigen Inertgase, beispielsweise flüssiger Stickstoff.

In den folgenden Figuren sind die Ausgangsituation und die Wirkung des Verfahrens dargestellt. Es zeigen:
- Figur 1: eine Eisenmatrix mit Sphärolithen
- Figur 2: eine Originaloberfläche und eine behandelte Oberfläche
- Figur 3: eine Vergrösserung einer Originaloberfläche

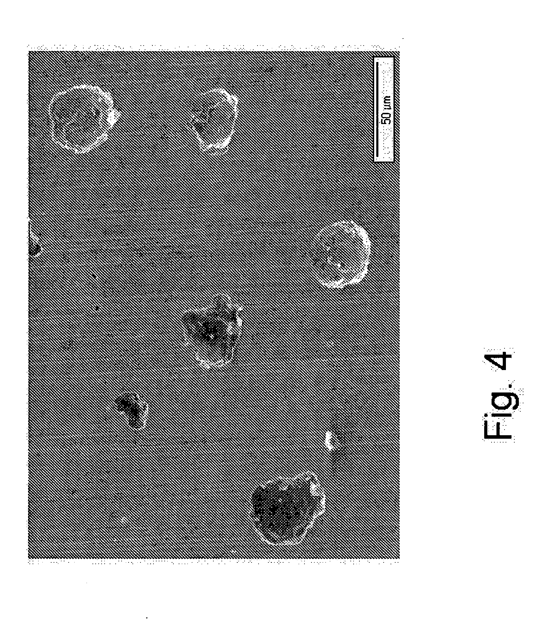

- Figur 4: eine Vergrösserung einer behandelten Oberfläche

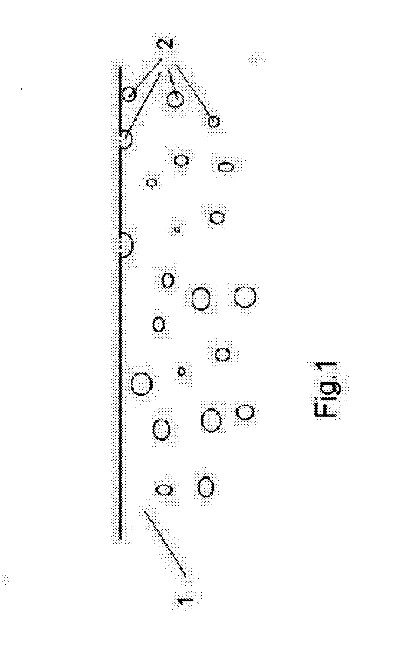

Die in Figur 1 schematisch dargestellte Skizze zeigt eine Eisenmatrix 1 mit Sphärolithen 2. An der Oberfläche sind die zum Teil abgeschliffenen Sphärolithe zu sehen.

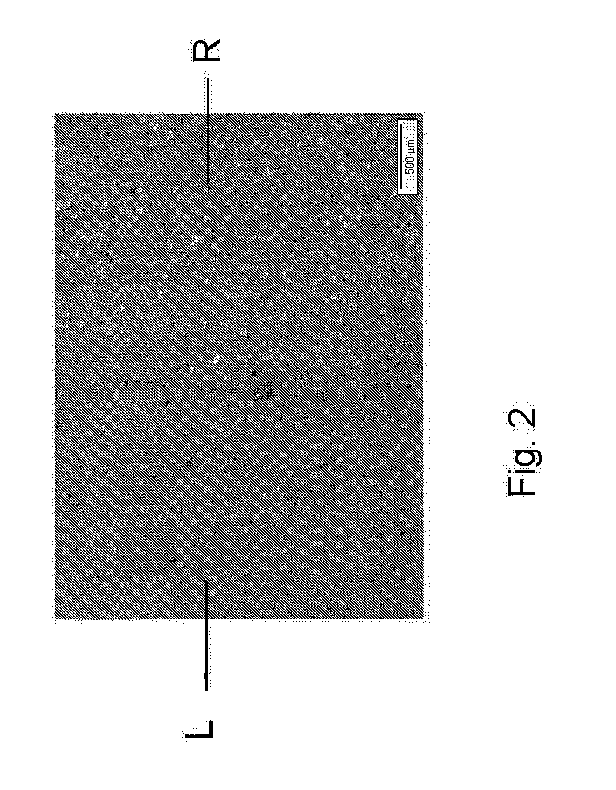

In der Figur 2 ist die Oberfläche eines Kurbelwellenbereichs gezeigt. Auf der linken Hälfte L der Abbildung 2 ist die Originaloberfläche mit den unerwünschten Deckeln zu sehen. Die rechte Hälfte R zeigt die mit Trockeneis behandelte Oberfläche.

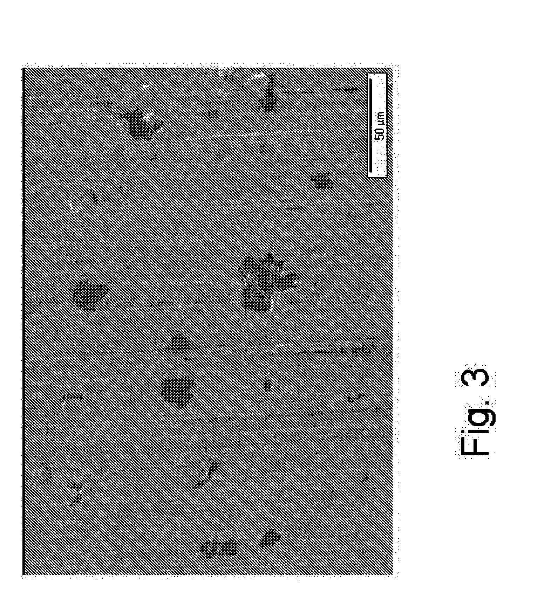

Die Verhältnisse sind vergrössert in den Figuren 3 (Originaloberfläche) und 4 (behandelte Oberfläche) zu sehen.

Bei der behandelten Oberfläche erkennt man deutlich die entfernten Deckel. Die einzelnen Sphärolithe sehen nahezu kreisförmig aus.

Zusammenfassend ist festzustellen, dass die nach dem erfindugsgemässen Verfahren behandelten Oberflächen der Lagerflächen der Gussteile keine Deckel mehr aufweisen, was deutlich einen Gleitverschleiss vermindert.

## Patentansprüche

1. Verfahren zur Oberflächenbehandlung von hoch beanspruchten gleitenden Lagerflächen für Kurbelwellen und Kurbelwellenlager von Gussteilen aus Gusseisen mit Kugelgraphit, **dadurch gekennzeichnet, dass** die zu bearbeitenden Oberflächen schockartig bis auf mindestens minus 50° Celsius gekühlt werden.

2. Verfahren nach Anspruch 1, **dadurch gekennzeichnet, dass** die Oberflächen mit Trockeneiskugeln aus CO₂ beschossen werden.

3. Verfahren nach Anspruch 2, **dadurch gekennzeichnet, dass** die Trockeneiskugeln einen mittleren Durchmesser von 0.1 bis 5 mm, vorzugsweise von 1 bis 4mm, aufweisen.

4. Verfahren nach Anspruch 1, **dadurch gekennzeichnet, dass** die Oberflächen mit einem flüssigen Gas mit geeigneter Temperatur behandelt werden.

5. Verfahren nach Anspruch 4, **dadurch gekennzeichnet, dass** das flüssige Gas ein Inertgas, insbesondere Stickstoff ist.

## Claims

1. Process for the surface treatment of highly stressed sliding bearing surfaces for crankshafts and crankshaft bearings of cast parts made of nodular cast iron, **characterized in that** the surfaces to be machined are rapidly cooled to at least -50°C.

2. Process according to Claim 1, **characterized in that** dry-ice pellets of CO₂ are fired at the surfaces.

3. Process according to Claim 2, **characterized in that** the dry-ice pellets have a mean diameter of 0.1 to 5 mm, preferably of 1 to 4 mm.

4. Process according to Claim 1, **characterized in that** the surfaces are treated with a liquid gas at a suitable temperature.

5. Process according to Claim 4, **characterized in that** the liquid gas is an inert gas, in particular nitrogen.

## Revendications

1. Procédé pour le traitement de surface de faces de paliers glissantes soumises à de fortes contraintes pour des vilebrequins et des paliers de vilebrequins de pièces moulées en fonte à graphite sphéroïdal, **caractérisé en ce que** les surfaces à traiter sont refroidies brutalement au moins jusqu'à moins 50° Celsius.

2. Procédé selon la revendication 1, **caractérisé en ce que** les surfaces sont grenaillées avec de la grenaille de glace sèche de CO₂.

3. Procédé selon la revendication 2, **caractérisé en ce que** la grenaille de glace sèche présente un diamètre moyen de 0,1 à 5 mm, de préférence de 1 à 4 mm.

4. Procédé selon la revendication 1, **caractérisé en ce que** les surfaces sont traitées avec un gaz liquide à une température appropriée.

5. Procédé selon la revendication 4, **caractérisé en ce que** le gaz liquide est un gaz inerte, notamment de l'azote.
